Europäisches Patentamt

(19) European Patent Office    (11) Numéro de publication: **0 018 246**

Office européen des brevets    **B1**

(12)    **FASCICULE DE BREVET EUROPEEN**

(45) Date de publication du fascicule du brevet: **12.10.83**    (51) Int. Cl.³: **F 42 C  13/00,**
    **F 42 B  23/26, G 01 N  27/14**

(21) Numéro de dépôt: **80400365.5**

(22) Date de dépôt: **18.03.80**

(54) Dispositif allumeur pour mines antivéhicules omnidirectionnelles.

(30) Priorité: **20.04.79 FR  7909979**

(43) Date de publication de la demande:
    **29.10.80 Bulletin 80/22**

(45) Mention de la délivrance du brevet:
    **12.10.83 Bulletin 83/41**

(84) Etats contractants désignés:
    **BE DE GB NL**

(56) Documents cités:
    **FR - A - 2 087 004**
    **US - A - 3 653 324**
    **US - A - 3 763 780**
    **US - A - 4 007 456**
    **US - A - 4 081 785**

    **THE RADIO AND ELECTRONIC ENGINEER, vol.
    44, no. 2, février 1974
    LONDRES (GB)
    WATSON et al.: "Applications of The Taguchi
    Gas Sensor to Alarms for Inflammable Gases",
    pages 85—91**

(73) Titulaire: **ETAT-FRANCAIS représenté par le
    DELEGUE GENERAL POUR L'ARMEMENT
    Bureau des Brevets et Inventions de la Délégation
    Générale pour l'Armement 14, rue Saint-
    Dominique
    F-75997 Paris Armées (FR)**

(72) Inventeur: **Gendrot, Bernard
    4, Impasse des Bosquets La Reynerie
    F-31300 Toulouse (FR)**
    Inventeur: **Bosc, Jacque
    30, rue des Braves
    F-31300 Toulouse (FR)**
    Inventeur: **Aussenac, Gilbert
    3 et 5, rue Guyaux
    F-31200 Toulouse (FR)**

Courier Press, Leamington Spa, England.

Dispositif allumeur pour mines antivéhicules omnidirectionnelles

La présente invention a pour objet un dispositif allumeur de mine antivéhicule omnidirectionnelle enterrée, du type comprenant au moins un capteur sensible à une signature d'un véhicule à moteur à neutraliser ou à endommager.

Les véhicules à moteur lourds blindés peuvent être repérés d'un très grand nombre de manières. Ainsi, il est possible de détecter la masse métallique, au moyen d'un radar; la masse magnétique, au moyen d'un magnétomètre; la masse en mouvement, au moyen d'un radar Doppler; les vibrations, au moyen d'un seismographe; les émissions sonores, au moyen d'écoutes de sons; les émissions de rayons électro-magnétiques, au moyen de récepteurs-radios; les émissions de gaz chauds d'échappement, au moyen de spectromètres. Par exemple, le brevet US 3.763.780 montre un allumeur de mine utilisant une influence électromagnétique de la cible transmise par un détecteur de proximité, à travers une interface électronique de commande de l'allumage de la mine. L'ensemble de ces différents modes de détection, qui peuvent être combinés entre eux, permet d'obtenir des résultats relativement précis. Toutefois, les équipements nécessaires sont généralement fragiles et volumineux. Or, un allumeur de mines est un équipement qui doit précisément être adapté pour rester en fonctionnement continu sur des terrains de genres très divers, pendant plusieurs jours et sous des climats différents. Les différents détecteurs du type précité ne répondent pas à tous les critères requis.

La présente invention vise à réaliser un type d'allumeur de mine qui soit à la fois robuste, discret, peu coûteux, efficace et peu sensible aux contre-mesures.

La présente invention vise encore à réaliser un allumeur de mines qui permette de mettre en oeuvre une mine omnidirectionnelle anti-chars qui agisse avec un maximum d'efficacité et soit adaptée pour agir notamment en présence d'une concentration de véhicules.

Ces buts sont atteints grâce à un dispositif allumeur du type mentionné au début qui, conformément à l'invention, comprend au moins un détecteur de gaz d'échappement à semi-conducteur, associé à une interface électronique de commande de l'allumage de la mine qui comprend au moins un circuit de seuil sensible aux signaux émis par le détecteur de gaz dont l'amplitude est supérieure à une valeur prédéterminée, et éventuellement un circuit de maintien, sensible aux signaux issus du circuit de seuil qui se prolongent au-delà d'une durée prédéterminée.

De préférence, le détecteur de gaz d'échappement est un détecteur au bioxyde d'étain de type N.

L'allumeur selon l'invention est particulièrement adapté pour être associé à une mine comprenant une première charge pyrotechnique d'éjection et une seconde charge pyrotechnique pour projeter de manière omnidirectionnelle des grenades antichar associées à ladite seconde charge pyrotechnique.

D'après un mode de réalisation particulier, l'allumeur comprend en outre un détecteur sismique, et l'interface électronique comprend des circuits pour n'autoriser la mise à feu que si le détecteur sismique et le détecteur de gaz sont tous deux activés.

Selon la présente invention, la détection d'une cible ou d'un ensemble de cibles constitués par des chars est ainsi effectuée de manière prépondérante par la mise en évidence des gaz de combustion rejetés par les moteurs à combustion interne ou moteurs thermiques, sans que la détection de gaz fasse appel à des appareils complexes fragiles et encombrants tels que des dispositifs d'analyse chimique dans des tubes de détection, des dispositifs d'analyse infra-rouge, des spectrophotomètres, des appareils de chromatographie en phase gazeuse, des appareils de combustion catalytique.

D'une manière générale, les dispositifs selon la présente invention sont indépendants des points chauds naturels de la structure de la cible, sont peu sensibles à des contre-mesures et permettent une détection à distance et omnidirectionnelle, passive, donc discrète, et capable de mettre en évidence des cibles mobiles aussi bien qu'immobiles ou cachées.

D'autres caractéristiques et avantages de la présente invention apparaitront mieux à la lecture de la description qui fait suite de modes particuliers de réalisation de l'invention, donnés uniquement à titre d'exemple non limitatifs, en référence au dessin annexé, sur lequel:

— La figure 1 est une vue schématique de l'ensemble du dispositif allumeur selon l'invention,

— la figure 2 est une vue schématique de l'allumeur de la figure 1 associé à une mine antichar, en position de fonctionnement,

— la figure 3 est un schéma d'exemple de circuit électronique incorporé dans un dispositif allumeur selon l'invention,

— les figures 4a et 4b représentent la forme des signaux en différents points du circuit de la figure 3, et

— la figure 5 représente le schéma électronique d'une variante de réalisation d'un dispositif allumeur selon l'invention.

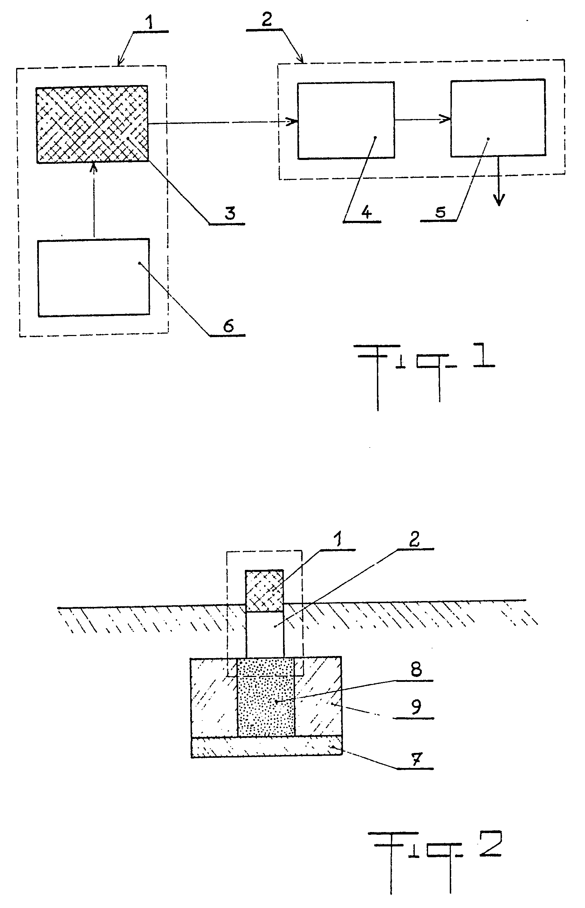

Si l'on se reporte à la figure 1, on voit un dispositif allumeur qui peut se décomposer en deux sous-ensembles distincts, à savoir un ensemble de détection 1 et un circuit d'interface électronique 2.

L'ensemble de détection 1 comprend un détecteur proprement dit, ou senseur 3 capable de déceler la présence de monoxyde de carbone dans l'air ambiant. Le senseur 3 qui est de type semi-conducteur peut être un détecteur de gaz à semi-conducteurs tels que ceux employés comme éléments de sécurité pour détecter des fuites de gaz combustible.

Le senseur 3 peut être notamment constitué par du bioxyde d'étain ($SnO_2$) aggloméré de type N. La caractéristique essentielle de ce composant semi-conducteur est sa variation négative de résistance électrique sous l'action de la chaleur et en présence, sur sa surface, d'oxyde de carbone. Le senseur 3 qui est chauffé et polarisé par le circuit 6, délivre un signal électrique dont l'amplitude est fonction de la teneur de l'air ambiant en monoxyde de carbone.

Le circuit électronique 2 comprend au moins un circuit trigger à seuil 4 qui, lorsque l'amplitude du signal issu du senseur 3 dépasse une valeur prédéterminée, commande un circuit 5 de mise à feu de la mine associée à l'allumeur 1, 2. La valeur de la tension de seuil du circuits trigger 4 est réglée en fonction de la sensibilité souhaitée et tient compte du bruit de fond engendré par le détecteur 1.

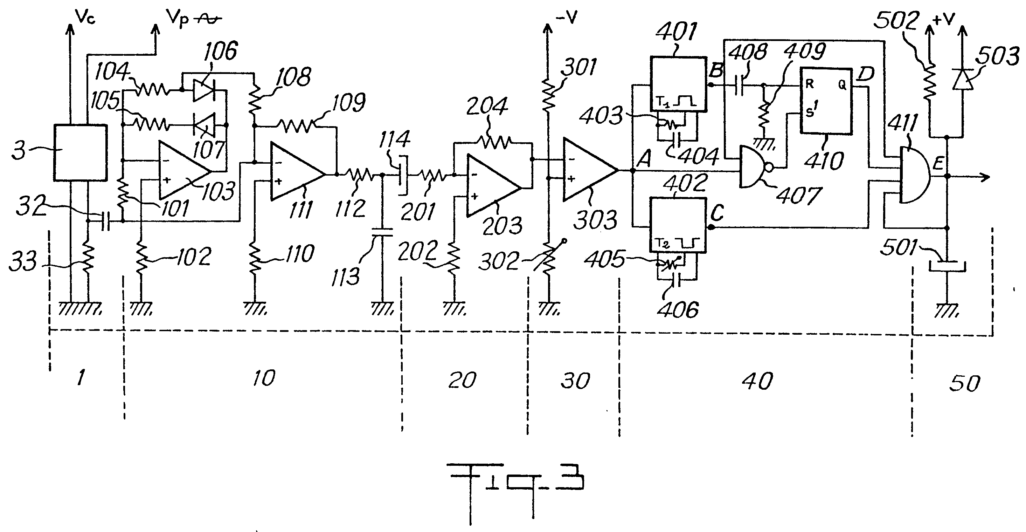

Le dispositif allumeur 1, 2 qui détecte les nauges de gaz de combustion issus de sous-ensemble moteur des véhicules terrestres, ou des aéronefs, selon les applications envisagées, peut être avantageusement lié à une mine anti-char omnidirectionnelle enterrée, qui peut elle-même être du type aérosol ou du type à grenades comme dans le cas de l'exemple de la figure 2.

En se référant à la figure 2, au signal de mise à feu délivré par le circuit (5) de l'interface électronique (2) de l'allumeur, une première charge pyrotechnique (7) fait bondir la mine au-dessus du sol puis une seconde charge explosive (8) projette les grenades (9) de manière omnidirectionnelle dans un plan horizontal.

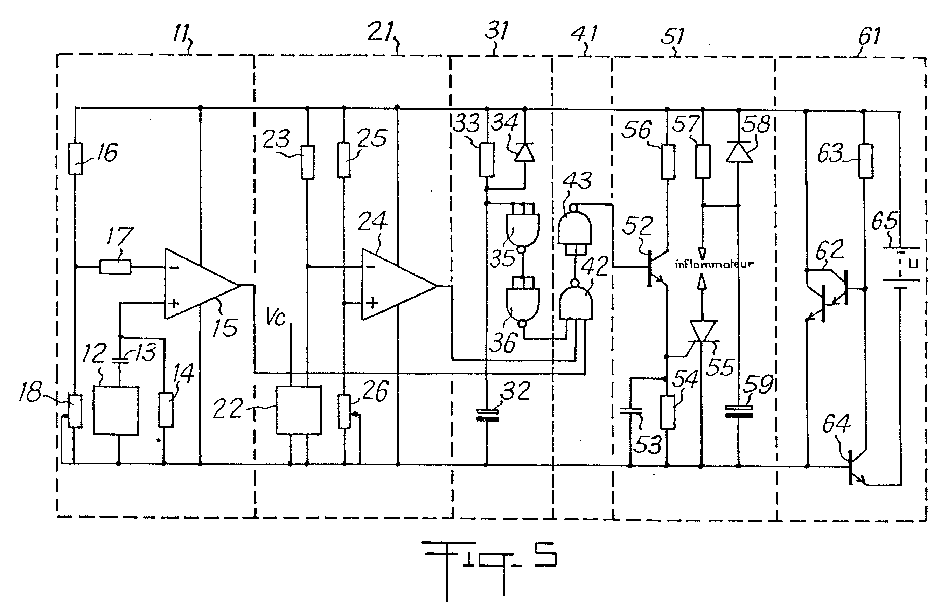

L'efficacité vulnérante de la mine est naturellement maximale si la mise à feu a lieu au milieu d'un groupe de chars. Pour cela, conformément à la présente invention, la mise à feu ne peut avoir lieu que l'orsqu'un nuage suffisamment dense de gaz de combustion, a été détecté, c'est à dire après le passage des premiers véhicules. Ainsi, dans le mode de réalisation représenté sur la figure 3, un circuit de maintien permet de ne prendre en compte que des signaux qui non seulement dépassent une amplitude prédéterminée, mais encore restent présents pendant un certain temps supérieur à une durée prédéterminée.

Sur le schéma électronique d'allumeur de la figure 3, on peut voir un premier étage 1 comprenant un détecteur 3 au bioxyde d'étain délivrant un signal électrique dont l'amplitude dépend du taux d'oxyde de carbone de l'air ambiant, qui est lui-même fonction de la concentration de véhicules à moteur à combustion interne et de leur puissance. Le détecteur 3 est chauffé à partir d'une tension $V_c$, qui est une donnée de construction, et est polarisé par une résistance 33 à partir d'une tension sinusoïdale $V_p$. Le signal alternatif recueilli aux bornes de la résistance 33 est transmis par le condensateur 32 à l'étage 10 de redressement-filtrage. L'étage 10 comprend des résistances 101, 102 de polarisation des entrées d'un premier amplificateur opérationnel 103. Les résistances 104, 105 et les diodes 106, 107 associées à l'amplificateur 103 réalisent avec ce dernier et avec un second amplificateur opérationnel 111 auquel sont associées les résistances 108, 109, 110, un montage de redressement double alternance. Le circuit constitué par la résistance 112 et le condensateur 113 assure le filtrage du signal redressé. Le signal redressé et filtré est ensuite appliqué par l'intermédiaire d'un condensateur de liaison 114 à un étage amplificateur 20.

L'étage amplificateur 20 assure la détection et l'amplification des variations d'amplitude du signal issu de l'étage 10 de redressement-filtrage et comprend un amplificateur opérationnel 203 associé à des résistances 201, 202, 204 qui déterminent les paramètres de l'étage de d'amplification.

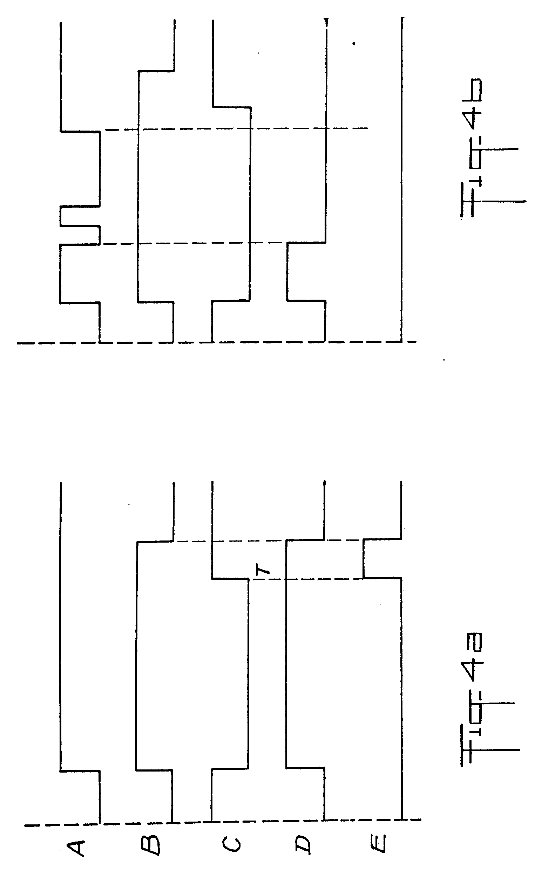

Le signal issu de l'étage amplificateur 20 est appliqué à un détecteur de seuil ou trigger 30 qui comprend un amplificateur opérationnel 303 assurant la comparaison entre le signal amplifié issu de l'étage 20 et une tension de référence déterminée par la résistance 301 et un potentiomètre 302. Lorsque l'amplitude du signal issu de l'étage 20 est assez importante, le trigger 30 délivre un signal positif en sortie (voir courbes A sur les figures 4a et 4b).

L'étage 40 de maintien comprend deux bascules monostables 401 et 402, une bascule RS 410 et deux portes ET 411 et NON ET 407. L'étage 40 vise à ne permettre la délivrance d'un signal en sortie de la porte ET 411 que lorsqu'un signal positif se maintient suffisamment longtemps en entrée de l'étage 40.

Le fonctionnement du circuit 40 sera expliqué en considérant le schéma de la figure 3 et les diagrammes des temps des signaux représentés sur les figures 4a et 4b et correspondant aux points A, B, C, D et E du circuit indiqués sur la Fig. 3. Lorsque la sortie du circuit comparateur ou trigger 303 passe à l'état "1", la sortie Q de la bascule RS 410 passe à l'état "1" par l'intermédiaire du circuit monostable 401 dont le front de montée du signal est transmis par le circuit différentiateur interposé entre le circuit monostable 401 et la bascule RS 410 et constitué par le condensateur 408 et la résistance 409.

La durée $T_1$ de l'état métastable du circuit monostable 401 est supérieure au temps $T_2$ d'analyse du signal déterminé par le circuit monostable 402. Si pendant la durée $T_1$ la sortie du trigger 303 retombe à l'état "0", la bascule RS 410 est remise à "0" par l'intermédiaire de la porte NON ET 407 et la porte ET 411 est bloquée (figure 4b). Dans le cas contraire (figure 4a), au bout du temps $T_2$, la sortie du circuit monostable 402 passe à l'étant "1" et un signal positif de mise à feu apparait à la sortie de la porte ET 411. La durée $T_1$ de l'état métastable du circuit monostable 401 dépend des résistance 403 et capacité 404, tandis que la durée $T_2$ de l'état métastable du circuit monostable 402 dépend des résistance ajustable 405 et capacité 406.

Par sécurité, le signal de mise à feu ne peut effectivement se produire qu'après une période de retard d'armement engendrée par le circuit 50 comprenant un condensateur 501, une résistance 502 et une diode 503, et initialisée lors de la mise sous tension de l'ensemble électronique.

La sélectivité de l'allumeur comporte ainsi deux réglages: La résistance 302 qui permet d'ajuster le seuil au dessus duquel les augmentations d'amplitude sont prises en compte et la résistance 405 qui détermine le temps pendant lequel le signal doit être maintenu.

Le premier réglage dépend du type de capteur utilisé et de la sensibilité souhaitée pour l'allumeur.

Le deuxième réglage, qui permet en outre de minimiser l'effect des contre-mesures, sert à éviter la mise à feu de la mine par un véhicule isolé, car elle est peu efficace dans ce cas.

A titre d'exemple, avec un capteur de type TGS 812 commercialisé par la firme Figaro Engeneering, il a été possible de réaliser un allumeur pour mine omnidirectionnelle antichar, pour lequel la valeur de seuil de variation du signal électrique fourni à partir du capteur était de 1 V et la durée de maintien $T_2$ était de 20 secondes.

La figure 5 représente au autre mode de réalisation de l'invention.

Le dispositif allumeur de la figure 5 comprend un sous-ensemble 11 de détection sismique, un sous-ensemble 21 de détection d'oxyde de carbone, un étage 31 de temporisation de mise sous tension, un circuit 41 de logique de commande, un circuit 51 de mise à feu et un sous-ensemble 61 comprenant une source d'énergie et un circuit de sécurité.

Le sous-ensemble 11 de détection sismique comprend de façon classique un capteur sismique 12 capable d'émettre un signal électrique fonction des vibrations sismiques qu'il reçoit. Le signal issu du capteur 12 est mis en forme par le circuit dérivateur constitué par le condensateur 13 et la résistance 14 et appliqué à une entrée d'un amplificateur opérationnel 15. Une valeur de seuil déterminée par les résistances 16, 17, 18 est appliquée sur la seconde entrée de l'amplificateur opérationnel 15 qui émet un signal en sortie quand le signal fourni par le capteur 12 permet l'application d'un signal d'amplitude suffisamment élevée sur la deuxième entrée de l'amplificateur différentiel 15.

Le sous-ensemble 21 de détection de monoxyde de carbone comprend un détecteur 22 analogue aux détecteurs 3 des figures 1 à 3. Une tension $V_c$ de chauffage est appliquée au détecteur 22 tandis qu'une tension de polarisation continue est appliquée par l'intermédiaire de la résistance 23 au détecteur 22. La tension de polarisation qui, an niveau du point de liaison entre la résistance 23 et le capteur 22, est fonction de la teneur de l'air ambiant en monoxyde de carbone, est appliquée sur une entrée de l'amplificateur opérationnel 24. Une valeur de seuil déterminée par les résistances 25 et 26 est appliquée sur la deuxième entrée de l'amplificateur 24 qui assure ainsi le rôle de comparateur entre le signal issu du détecteur 22 et la valeur de seuil prédéterminée et ajustable par le résistance 26.

Le circuit 31 composé du condensateur 32, de la résistance 33 et de la diode 34 constitue un circuit de retard classique qui, par l'intermédiaire de deux portes inverseuses NON ET 35 et 36 fournit à la porte ET 42, 43 un signal d'autorisation un intervalle de temps prédétermine après la mise sous tension. L'étage logique de commande 41 comprenant une porte NON ET 42 et une porte inverseuse NON ET 43 fournit un signal sur la base du transistor 52 du circuit de mise à feu 51 lorsque le sous-ensemble de détection sismique 11, le sous-ensemble de détection de monoxyde de carbone 21 et le sous-ensemble de temporisation 31 fournissent simultanément chacun un signal positif à l'entrée de l'étage logique de commande 41.

L'étage de mise à feu 51 est lui-même classique. L'ensemble du condensateur 59 de la résistance 57 et de la diode 58 fournit l'énergie nécessaire à la mise à feu. Le déclenchement de la mise à feu de l'inflammateur par le thyristor 55 dont la gachette est reliée à l'émetteur du transistor 52 s'effectue de manière classique. Le collecteur du transistor 52 est relié au pôle positif de la source d'alimentation tandis que l'émetteur de ce même transistor est relié au pôle négatif par l'intermédiaire de la résistance 54 et du condensateur 53 montés en parallèle.

L'étage 61 de l'allumeur comprend une source de tension continue 65 et des éléments classiques d'un circuits de sécurité comprenant un montage Darlington 62, une résistance 63 et un transistor 64.

Ainsi, avec le montage de la figure 5, la logique de commande 41 n'est déverrouillée qu'en présence de trous informations:

1°) Signal électrique issu de l'étage 11 de faible détection sismique délivré lors du proche voisinage d'un char,

2°) Signal électrique issu de l'étage 21 de détection gazeuse délivré quand un seuil préréglé de teneur de l'air en oxyde de carbone, correspondant à la proximité de plusieurs chars est atteint,

3°) Signal électrique issu de l'étage 31 de temporisation de mise sous tension délivré après la retombée de la temporisation.

En pratique, à ce moment, les premiers chars de la formation seront passés, donc atteints par l'arrière, tandis que les chars suivants seront atteints par l'avant.

## Revendications

1. Dispositif allumeur de mine antivéhicule omnidirectionnelle enterrée, du type comprenant au moins un capteur sensible à une signature de véhicule à moteur à neutraliser ou à endommager, associé à une interface électronique de commande (2) de l'allumage de la mine, caractérisé en ce qu'il comprend au moins un détecteur de gaz d'échappement à semi-conducteur (3) et en ce que l'interface électronique (2) comprend au moins un circuit de seuil (4) sensible aux signaux émis par le détecteur de gaz dont l'amplitude est supérieure à une valeur prédéterminée.

2. Dispositif allumeur selon la revendication 1, caractérisé en ce que le détecteur de gaz d'échappement est un détecteur au bioxyde d'étain du type N.

3. Dispositif allumeur selon la revendication 1, caractérisé en ce que l'interface électronique comprend en outre un circuit de maintien (40), sensible aux signaux issus du circuit de seuil qui se prolongent au-delà d'une durée prédéterminée.

4. Dispositif allumeur selon l'une quelconque des revendications 1 à 3, caractérisé en ce qu'il est associé à une mine comprenant une première charge pyrotechnique d'éjection (7) et une seconde charge pyrotechnique (8) pour projeter de manière omnidirectionnelle des grenades (9) anti-char associées à ladite seconde charge pyrotechnique.

5. Dispositif allumeur selon l'une quelconque des revendications 1 à 4, caractérisé en ce qu'il comprend en outre un détecteur sismique (12), et en ce que l'interface électronique comprend des circuits pour n'autoriser la mise à feu que si le détecteur sismique et la détecteur de gaz sont tous deux activés.

## Patentansprüche

1. Zündanlage für eingegrabene und in alle Richtungen wirkende Kraftfahrzeugminen, mit zumindest einem auf die zu bekämpfende Kraftfahrzeugklasse ansprechenden Meldegeber, sowie einer elektronischen Schnittstelle (2) zur Steuerung der Minenzündung, dadurch gekennzeichnet, dass sie zumindest einen aus Halbleitern ausgebauten Auspuffgasdetektor (3) umfasst und dass in der elektronischen Schnittstelle zumindest ein Schwellenglied (4) einbegriffen ist, das auf die Signale des Auspuffgasdetektors anspricht, sofern dieselben einen im voraus bestimmten Wert übersteigen.

2. Zündanlage nach Anspruch 1, dadurch gekennzeichnet, dass das Vorhandensein von Auspuffgasen durch einen Type N Zinnoxyddetektor festgestellt wird.

3. Zündanlage nach Anspruch 1, dadurch gekennzeichnet, dass die elektronische Schnittstelle ebenfalls eine Halteschaltung (40) umfasst, die auf Schwellengliedsignale anspricht, sofern dieselben über eine im voraus bestimmte Zeit andauern.

4. Zündanlage nach Ansprüchen 1 bis 3, dadurch gekennzeichnet, dass sie an eine Mine angeschlossen wird, die zwei pyrotechnische Ladungen enthält: eine erste (7) zum Selbstausstossen und eine zweite (8) zum Abschleudern in alle Richtungen der mit dieser zweiten pyrotechnischen Ladung verbundenen Panzerabwehrgranaten.

5. Zündanlage nach Ansprüchen 1 bis 4, dadurch gekennzeichnet, dass sie ebenfalls einen Erschütterungsdetektor (12) umfasst und dass die elektronische Schnittstelle Schaltkreise aufweist, die die Zündung nur dann auslösen, wenn sowohl der Erschütterungsdetektor als auch der Auspuffgasdetektor erregt werden.

## Claims

1. An igniter for buried, omni-directional anti-vehicle mines of the type which has at least one sensor sensitive to the signature of a motor vehicle to be neutralised or damaged, associated with an electronic interface (2) for mine ignition control, characterised in that it comprises at least one semiconductor exhaust gas detector (3); said electronic interface (2) comprising at least one threshold circuit (4) sensitive to any signals by said gas detector above a predetermined amplitude.

2. Igniter according to claim 1, wherein said exhaust gas detector is a N-type stannic oxide detector.

3. Igniter according to claim 1, wherein said electronic interface also includes a holding circuit (40) sensitive to signals output from said threshold circuit which continue beyond a predetermined duration.

4. Igniter according to any one claims 1 to 3, wherein said igniter is associated with a mine equipped with a first pyrotechnic charge (7) for ejection and a second pyrotechnic primary charge (8) for omnidirectional projection of the anti-tank grenades (9) associated with said second pyrotechnic charge.

5. Igniter according to any one of claims 1 to 4, wherein said igniter is further equipped with a seismic detector (12) and said electronic interface includes circuits designed to inhibit detonation unless both said seismic detector and said gas detector are triggered.

Fig. 1

Fig. 2

Fig. 3

Fig_5

0 018 246

Fig. 4b

Fig. 4a

A
B
C
D
E

T